# EUROPEAN PATENT APPLICATION

(11) **EP 1 780 580 A1**
(43) Date of publication of application: **02.05.2007**
(21) Application number: 05425755.5
(22) Date of filing: 27.10.2005
(51) Int. Cl.: G02C 11/06, H04R 1/10

(54) **Support particularly for frames of eyeglasses and in-ear speakers**

(71) Applicant: Rabbi, Olver, 40127 Bologna (IT)
(72) Inventor: Rabbi, Olver, 40127 Bologna (IT)
(74) Representative: Alagem Modiano, Lara S.

(57) **Abstract**

A support (1) particularly for frames (13) of eyeglasses and in-ear speakers, comprising a substantially curvilinear framework (2) with a curvature which is at least partially complementary with respect to the natural curvature of the root of the helix (3), of the ridge (4) of the antihelix, of the inferior crux (5) of the antihelix of the ear (6) of the user (A). The curvilinear framework (2) is adapted for at least partial interlocking in at least one of the portions of the pinna.

## Description

The present invention relates to a support particularly for frames of eyeglasses and in-ear speakers.

Commercially available eyeglasses allow the user to support the lenses and keep them correctly positioned at the appropriate focal distance even during movements and in various positions.

The eyeglasses in fact rest on the ears (with the end part of the temples) and on the nose (by means of the appropriately provided pads fixed to the frame between the lenses). With prolonged use, resting contact on the nose can cause the part to become sensitive, making it consequently impossible to further support the eyeglasses. The damage caused by the pads can also be aesthetic: prolonged use entails the presence of a mark on the skin, at the resting points of the pads, which disappears only after a long period of time spent without wearing eyeglasses.

Moreover, the support provided by the ears and nose does not secure the eyeglasses to the face of the user, and therefore, in all situations in which the user is moving, the eyeglasses may easily fall or shift, assuming a position which is not adapted for their task. In order to obviate this drawback, there are various solutions which provide straps or elastic bands which surround the head of the user and have their ends fixed to the temples: in addition to being impractical, these solutions often have a considerable aesthetic impact, which prevents their adoption in particular situations. The specific alternative solutions that have been provided so far require the presence of grip components which engage the resting contact regions (nose and ears) and which, after being used for some time, can cause pain and leave marks on the skin.

There are also other accessories which are designed to be arranged on the head of the user, i.e., all those items which must interact directly with the user's hearing.

Hearing aids, for example, are constituted substantially by two parts: one part is normally inserted in the outermost region of the auditory canal (the internal boundary region of the outer ear), while the body of the device rests on top of the pinna. More recently, hearing aids have been developed which are constituted by a single element accommodated in the end part of the auditory canal.

Since in any case this is a push-fit insertion, sudden movements of the user may cause the unintended escape of the device from the ear, with the risk that it may fall and be damaged, indeed because the anchoring of the device has not been ensured in any way.

In-ear speakers are another accessory of particular interest: these devices, connected by means of cable or remotely to an audio source (a radio, a portable audio player, or a telephone), allow to hear the signal that arrives from such source without disturbing nearby people and ensuring minimal space occupation.

In this case also, each speaker is inserted by pushing in the end portion of the auditory canal without securing it in any way: sudden movements entail its likely escape.

The device inserted within the auditory canal is in any case dangerous: the user cannot hear sounds that arrive from outside because the canal is completely obstructed by the device, and the speaker is further located very close to the eardrum, and a high-volume sound (even an unintentional one, such as for example a whistling tone produced by the Larsen effect) might damage the eardrum.

Moreover, in the case of speakers connected to a telephone, there is also the need to have a microphone, which must be arranged as close as possible to the mouth or must have an optimum directionality which allows to arrange it even at a relative distance from the mouth.

There are devices in which the speaker is inserted in the ear and an arm completely surrounds the head, so that a microphone supporting stem can be fixed to the arm. The resulting device, however, has a more substantial bulk and is awkward to use.

The aim of the present invention is to obviate the above-mentioned shortcomings and meet the mentioned requirements, by providing a support particularly for frames of eyeglasses and in-ear speakers which is firmly coupled to the ear and adapted to accommodate auxiliary units.

Within this aim, an object of the present invention is to provide a support which is not conspicuous and is substantially concealed once it has been put on, differing minimally from a conventional frame yet allowing to associate therewith additional elements with decorative and/or utility functions.

Positively, another object of the present invention is to allow its easy integration in a frame for eyeglasses which is highly stable when put on and adapted to accommodate auxiliary units.

Another object of the present invention is to provide a support which is simple, relatively easy to provide in practice, safe in use, effective in operation, and has a relatively low cost.

This aim and these and other objects, which will become better apparent hereinafter, are achieved by the present support particularly for frames of eyeglasses and in-ear speakers, characterized in that it comprises a substantially curvilinear framework with a curvature which is at least partially complementary with respect to the natural curvature of the root of the helix, of the ridge of the antihelix, of the inferior crux of the antihelix of the ear of the user, said curvilinear framework being suitable for at least partial interlocking in at least one of said portions of the pinna.

Further characteristics and advantages of the invention will become better apparent from the following detailed description of a preferred but not exclusive embodiment of a support particularly for frames of eyeglasses and in-ear speakers, illustrated by way of non-limiting example in the accompanying drawings, wherein:
Figure 1 is a side view of the end portion of a possible embodiment of a support particularly for frames of eyeglasses and in-ear speakers according to the invention, inserted in a pinna;
Figure 2 is a side view of a possible embodiment of a support particularly for frames of eyeglasses and in-ear speakers, provided with a microphone and a speaker inserted in a pinna;
Figure 3 is a perspective view of a possible embodiment of a support particularly for frames of eyeglasses and in-ear speakers according to the invention;
Figure 4 is a front view of some of the possible shapes of the end portions of possible embodiments of supports particularly for frames of eyeglasses or in-ear speakers according to the invention;
Figure 5 is a perspective view of a possible embodiment of supports located on a frame of eyeglasses according to the invention;
Figure 6 is a perspective view of a possible embodiment of a temple for frames of eyeglasses provided with supports according to the invention;
Figure 7 is a side view of a possible embodiment of a support particularly for frames of eyeglasses and in-ear speakers provided with a microphone and a speaker inserted in a pinna;
Figure 8 is a side view of a possible embodiment of a support particularly for frames of eyeglasses and in-ear speakers provided with a microphone and with a speaker;
Figure 9 is a perspective view of a possible embodiment of a temple associated with the respective frame of the eyeglasses so that it can move.

With reference to the figures, the reference numeral 1 generally designates a support particularly for frames of eyeglasses and in-ear speakers.

The support 1 comprises a substantially curvilinear framework 2 provided with a curvature which is at least partially complementary with respect to the natural curvature of the root of the helix 3, of the ridge 4 of the antihelix, and of the inferior crux 5 of the antihelix of the pinna of the ear 6 of an user A. The framework 2 is suitable, thanks to its particular curvature, to interlock even partially in at least one of said portions of the pinna, ensuring high stability even if the user A is performing sudden movements.

Further, the framework 2 has protruding arms 7 with a curvature which is complementary with respect to the natural curvature of the antitragus 8, of the tragus 9, and of the intertragian incisura 10 of the ear 6 of the user A. Said curvilinear arms are adapted, thanks to their curvature, to interlock even partially in at least one of said portions of the pinna, increasing the stability of the support 1.

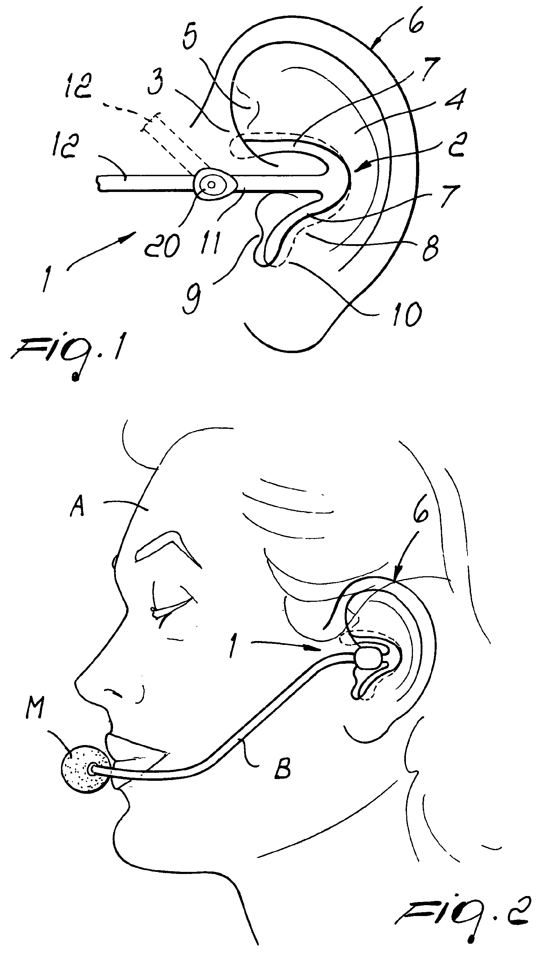

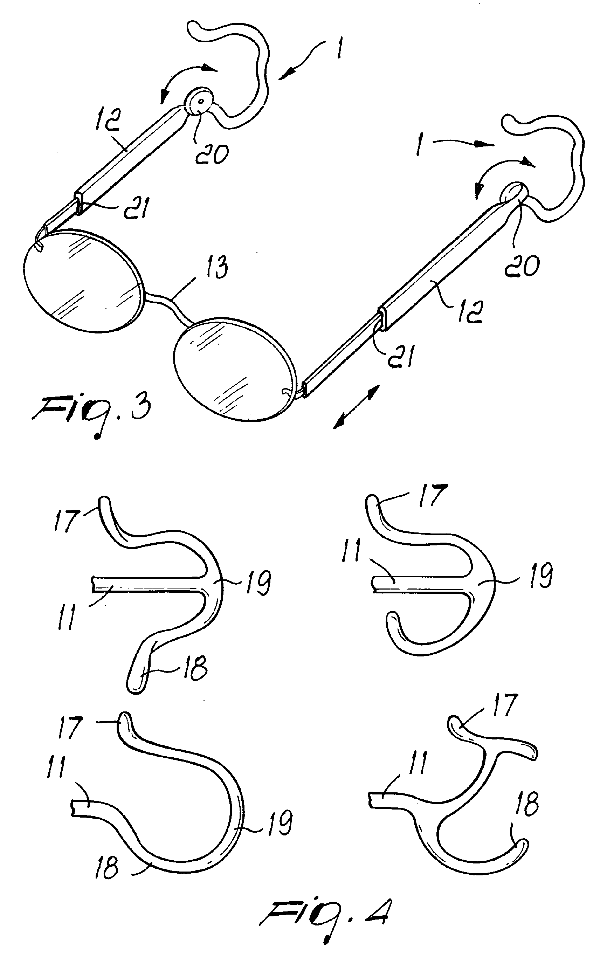

In the embodiments shown in Figures 1, 2, 3 and 4, the arms are substantially wire-like, with rounded outer surfaces in order to avoid being uncomfortable for the ear 6 of the user A.

The framework 2 comprises a substantially linear portion 11, which is located proximate to the root of the helix 3 when the support 1 is inserted in the ear 6 of the user A.

The substantially linear portion 11 is connected to, and aligned with, a respective temple 12 of a frame 13 for eyeglasses: in this case, the support 1 provides a stable support for the frame 13.

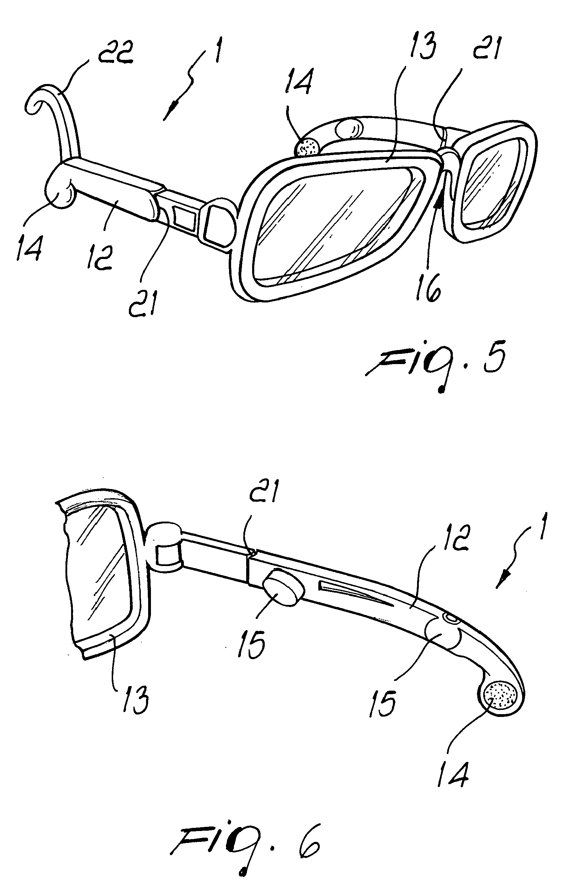

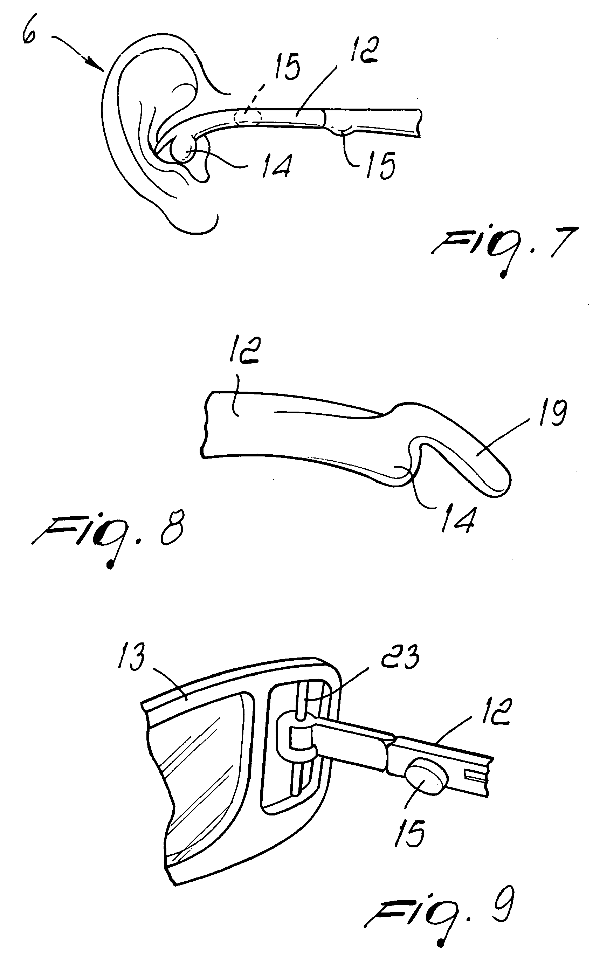

The linear portion 11 has, as shown in the particular embodiment shown in Figures 5, 6 and 7, a substantial terminal expansion 14, which when the frame 13 is worn by the user A is in a configuration for partial insertion in the auditory canal (in its outermost portion) of said user, preventing unwanted movements of the frame 13: the dimensions of the expansion 14 are calibrated so that their insertion in the auditory canal is not invasive or unpleasant for the user A and, at the same time, by not obstructing said canal completely, allows to hear clearly the sounds of the outside environment.

The temples 12 of the frame 13 are provided with respective protrusions 15 at various points of the head (for example at the temporal area) of the user A: the protrusions 15 are provided in order to ensure optimum contact (for example on the temporal area) of the temples 12, and said contact increases the stability of the frame 13, hindering unwanted movements of the frame 13.

The frame 13 has a central connecting bridge 16, which is very thick and shaped complementarily with respect to the shape of the root of the nose of the user A: this high thickness, too, is intended to firmly couple the frame 13 to the face of the user A.

All the frames 13 adapted to be associated with a support 1 according to the invention may have a plurality of cavities suitable to accommodate auxiliary units: for example, radio playback devices, speakers or amplifiers for the hearing impaired. One of the cavities is internal to the expansion 14 of the substantially linear portion 11 in order to accommodate a speaker.

In the embodiment shown in Figures 1, 2, 3 and 4, the curvilinear framework 2 (in the specific case, the arm 7 arranged upward) comprises an upper end 17, which is curved upward, is conveniently shaped complementarily with respect to the lower crux 5 of the antihelix, and rests, even partially, thereon when the support 1 is inserted in the ear 6 of the user A.

Again according to the embodiment shown in the above figures, the curvilinear framework 2 (in the specific case, the arm 7 arranged downward) may comprise a curved lower portion 18, which is conveniently shaped complementarily with respect to the tragus 9 and to the intertragian incisura 10 and rests, even partially, thereon when the support 1 is inserted in the ear 6 of the user A.

In the first three embodiments shown in Figure 4, it can be seen that the curvilinear framework 2 can also comprise a central region 19 which has a slight curvature: the region 19 is shaped complementarily with respect to the ridge 4 of the antihelix and with respect to the antitragus 8, in order to rest thereon, even partially, when the support 1 is inserted in the ear 6 of the user A.

It should be noted that the linear portion 11, the upper end 17, the lower portion 18 and the central region 19 are mutually joined at least two at a time as a consequence of the presence of substantially wire-like connecting segments: the purpose is evidently to maximize comfort for the user A, avoiding all solutions that entail sharp edges or sudden changes in level between one part and the contiguous one.

The curvilinear framework 2 can be made of any material (in accordance with constructive and structural requirements): in some embodiments of particular interest, the support 1 can be constituted by an internal metallic reinforcement, which has structural functions and is covered with soft material (for example such as rubber) of the same color as the frame 13 for eyeglasses or of a color similar to the color of the skin of the user A; other embodiments provide for production by using transparent material (for example polycarbonate), which while providing sufficient structural rigidity ensures the minimum conspicuousness of the support 1 when it is worn.

The support 1 can be fitted in the end part of each temple 12 of a frame for eyeglasses, optionally by interposing substantially adjustable connecting means, such as for example a hinge 20 with a rotation axis which is perpendicular to the plane that contains the temple 12 and the support 1, in order to allow rotations of the support 1 with respect to the temple 12 on said plane, or a telescopic element 21 which is adapted to change the length of each temple 12, adapting it to the shape of each user A.

A speaker unit is accommodated on the portion that is proximate to the tragus 9 (according to the embodiments shown in Figures 1 to 4) and/or on the expansion 14 (according to the embodiments shown in Figures 5 to 7) of the framework 2, and the arrangement of said unit is such that it faces, and is proximate to, the auditory canal in order to optimize its performance.

Likewise, the framework 2 can accommodate a microphone M in a portion thereof: depending on the characteristics of the microphone M, it is possible to resort or not to the presence of an orientable stem which is interposed in order to bring the microphone M closer to the mouth of the user A. Evidently, this interposition is not necessary if a directional microphone M is used, the field of competence of which is oriented toward the mouth of the user A.

It should be noted that the framework 2 can be provided substantially hollow in order to accommodate transceiver units, telephony units or other electronic devices.

The framework 2 can also accommodate decorations, which can be connected to every part thereof in order to conceal functional units (such as for example a hearing aid for the hearing impaired) or simply in order to give an individual character to the frame 13 with which the support 1 is associated.

The pair of supports 1 (one for the left ear 6 and one for the right ear 6 of the user A) can also comprise a curved rod, the ends of which are firmly coupled to a portion of the supports 1: the curved rod can constitute a supporting base for at least one accessory, such as for example a directional microphone M, a transceiver unit or an actual cellular telephone.

It should also be noted that since there is a slight natural difference in shape between the right ear and the left ear, the supports 1 designed for different ears are shaped differently with extremely small dimensional variations in order to adapt in the best possible way and cause no discomfort to the user A.

As a consequence of the increasing need for multifunction devices, it is possible to use the supports 1 to provide a frame 13 for eyeglasses which can also act as a hearing aid or as a cellular telephone.

With reference to the technologies that are currently commercially available, it is possible to arrange on the frame 13 a connector 22 (which can be an antenna or a support for a connecting cable) which can connect directly, by infrared rays, radio frequency or according to the Bluetooth technology, to a device (for example a cellular telephone or a radio).

It has thus been shown that the invention achieves the proposed aim and objects.

The invention thus conceived is susceptible of numerous modifications and variations, all of which are within the scope of the appended claims.

The association of the temple 12 with the frame 13 can occur as a consequence of its pivoting on an axis 23 which is rigidly coupled to the frame 13 in order to allow the vertical translational motion of the frame 13 when the temples 12 are motionless (being worn by the user A).

Any combination of the described embodiments or of one or more of them with embodiments which are part of the background art is understood to be included within the scope of the present invention.

All the details may further be replaced with other technically equivalent ones.

In the exemplary embodiment shown, individual characteristics, given in relation to specific embodiments, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A support particularly for frames (13) of eyeglasses and in-ear speakers, **characterized in that** it comprises a substantially curvilinear framework (2) with a curvature which is at least partially complementary with respect to the natural curvature of the root of the helix (3), of the ridge (4) of the antihelix, of the inferior crux (5) of the antihelix of the ear (6) of the user (A), said curvilinear framework (2) being adapted for at least partial interlocking in at least one of said portions of the pinna.

2. The support according to claim 1, **characterized in that** said framework (2) is provided with protruding arms (7) which are substantially curved with a curvature which is complementary with respect to the natural curvature of the antitragus (8), of the tragus (9) and the intertragian incisura (10) of the ear (6) of the user (A), said curvilinear arms (7) being adapted, thanks to said curvature, for even partial interlocking in at least one of said portions of the pinna.

3. The support according to claim 2, **characterized in that** said arms (7) are substantially wire-like.

4. The support according to claim 1, **characterized in that** said curvilinear framework (2) comprises a substantially linear portion (11), which lies proximate to the root of the helix (3) when the support (1) is inserted in the ear (6) of the user (A).

5. The support according to claim 4, **characterized in that** said substantially linear portion (11) is connected to, and aligned with, a respective temple (12) of a frame (13) for eyeglasses.

6. The support according to claim 5, **characterized in that** said linear portion (11) has a substantial terminal expansion (14) which, when the frame (13) is worn by the user (A), is in a configuration of partial insertion in the auditory canal thereof, preventing unwanted movements of said frame (13).

7. The support according to claim 5, **characterized in that** said temples (12) of said frame (13) have respective protrusions (15) at the temples of the user (A), which are adapted for resting on said temples, hindering unwanted movements of said frame (13).

8. The support according to claim 5, **characterized in that** said frame (13) has a central connecting bridge (16), which is very thick and shaped complementarily with respect to the root of the nose of the user (A).

9. The support according to one or more of the preceding claims, **characterized in that** said frame (13) is provided with a plurality of cavities which are adapted to accommodate auxiliary units, one of said cavities being internal to said expansion (14) of the substantially linear portion (11) in order to accommodate a speaker.

10. The support according to claim 1, **characterized in that** said curvilinear framework (2) comprises an upper end (17) which is curved upward, said end (17) being shaped complementarily with respect to the inferior crux (5) of the antihelix and resting even partially thereon when the support (1) is inserted in the ear (6) of the user (A).

11. The support according to claim 1, **characterized in that** said curvilinear framework (2) comprises a curved lower portion (18), which is shaped complementarily with respect to the tragus (9) and to the intertragian incisura (10) and rests even partially thereon when the support (1) is inserted in the ear (6) of the user (A).

12. The support according to claim 1, **characterized in that** said curvilinear framework (2) comprises a central region (19) which is slightly curved and is shaped complementarily with respect to the ridge (4) of the antihelix and with respect to the antitragus (8) and rests even partially thereon when the support (1) is inserted in the ear (6) of the user (A).

13. The support according to one or more of the preceding claims, **characterized in that** said linear portion (11), said upper end (17), said lower portion (18) and said central region (19) are mutually joined, at least two at a time, by way of wire-like connecting elements.

14. The support according to claim 1, **characterized in that** said curvilinear framework (2) is made of transparent material.

15. The support according to claim 1, **characterized in that** it is fitted in the end portion of each temple (12) of a frame (13) for eyeglasses by interposing substantially adjustable connecting means.

16. The support according to claim 15, **characterized in that** said connecting means comprise a hinge (20) with a rotation axis which is perpendicular to the plane that contains said temple (12) and said support (1), rotations of the support (1) with respect to the temple (12) being possible on said plane.

17. The support according to claim 15, **characterized in that** said connecting means comprise a telescopic element (21), which is adapted to change the length of each one of said temples (12).

18. The support according to claim 1, **characterized in that** a speaker unit is accommodated on the portion that lies proximate to the tragus (9) of said framework (2), faces the auditory canal and lies proximate thereto.

19. The support according to claim 1, **characterized in that** said framework (2) accommodates in a portion thereof a microphone (M), possibly with the interposition of an orientable stem (B).

20. The support according to claim 1, **characterized in that** said framework (2) accommodates at least one decoration.

21. The support according to claim 1, **characterized in that** said pair of frameworks (2) comprises a curved rod, the ends of which are firmly coupled in a portion of said frameworks (2), said rod being a supporting base for at least one accessory.

22. The support according to one or more of the preceding claims, **characterized in that** said supports (1), shaped in order to be inserted in the right ear (6) and the left ear (6), differ with very small dimensional variations.
